# EUROPEAN PATENT APPLICATION

(11) **EP 2 886 628 A1**
(43) Date of publication of application: **24.06.2015**
(21) Application number: 13197943.7
(22) Date of filing: 18.12.2013
(51) Int. Cl.: C10G 33/00, C10G 33/04, C10G 3/00, C10G 21/06, C10G 31/08, C10G 1/00

(54) **Process for washing a biologically derived feed**

(71) Applicant: SHELL INTERNATIONAL RESEARCH MAATSCHAPPIJ B.V., 2596 HR Den Haag (NL)
(72) Inventor: The designation of the inventor has not yet been filed
(74) Representative: Matthezing, Robert Maarten

(57) **Abstract**

A process comprising
a) providing a biologically derived feed
b) washing the biologically derived feed with a first stream of water, resulting in an leachate water stream;
c) providing a petroleum derived feed; and
d) washing at least part of the petroleum derived feed with at least part of the leachate water stream obtained in step b) to produce a waste water stream;

## Description

### TECHNICAL FIELD OF THE INVENTION

The present invention relates to a process for washing a biologically derived feed to a refinery.

### BACKGROUND OF THE INVENTION

With the diminishing supply of crude petroleum oil, use of sustainable, annually renewable biologically derived feeds is becoming increasingly important for the production of liquid fuels and/or chemicals. The use of such annually renewable biologically derived feeds may also allow for a more sustainable production of liquid fuels and more sustainable CO₂ emissions that may help meet global CO₂ emissions standards under the Kyoto protocol.

One of the options contemplated is to co-process biologically derived feeds and petroleum-derived feeds in a refinery. Examples of such processes are for example described in WO2012143550 and WO2013072391.

Deriving liquid fuels and/or chemicals wholly or partly from non-edible biologically derived feeds, such as cellulosic materials, is preferred as such non-edible renewable energy sources do not compete with food production.

Most of such non-edible biologically derived feeds, however, comprise high concentrations of, possibly dissociated, salts. The salts or ions may include alkaline metals such as potassium and/or sodium; alkaline earth metals such as magnesium and/or calcium; nitrogen, phosphorous, chlorine and/or sulphur.

These salts and/or ions may have a significant impact on processing equipment in a refinery. They may for example cause the formation of deposits, slags and fouling. In its dissolved form it may cause corrosion. When the salts precipitate during processing or co-processing in a refinery, they may form deposits in pipelines and equipment. The later may cause plugging and/or increased and/or unscheduled maintenance stops.

The salts and/or ions may be removed from cellulosic materials by washing and/or leaching.

It is also possible to first pretreat or liquefy a cellulosic material, whereafter salts and/or ions may be removed from the obtained pretreated cellulosic material or liquefied material by washing, leaching and/or extraction.

For example, NL1029909 describes a method for the treatment of biomass, wherein biomass if supplied to a torrefaction reactor and is torrefied in the torrefaction reactor by heating of the biomass to a torrefaction temperature in an oxygen-depleted environment under such a pressure that liquid water is present in the torrefaction reactor. NL1029909 describes that undesirable salts may dissolve in this liquid water during torrefaction and that such dissolved salts may subsequently be removed with the liquid water during a "sweating out" step after torrefaction.

In the process of removing the salts and/or ions from the (optionally pretreated) cellulosic material and/or liquefied material a considerable amount of waste water is produced.

From an environmental point of view it would be desirable to first purify such waste water before recycling it back into nature. NL1029909 mentions that purified waste water may still contain salts but can be disposed of as salt water to the sea, but from an environmental point of view this may still be highly undesirable. Methods have therefore been developed to remove such salts from salty waste water.

For example Jenkins et al. in their article titled "Biomass leachate treatment by reverse osmosis", published in Fuel Processing Technology vol. 81 (2003), pages 223-246, describe the leaching of alkali metals and chloride from biomass to reduce fouling and slagging in furnaces and boilers, especially for grasses and other herbaceous crops used as fuel. The leachate water obtained by water washing of rice straw was treated via reverse osmosis for water recovery.

The process as described by Jenkins, however, is less economic when scaling up to a commercial scale.

It would be an advancement to the art to provide a process that allows for the leaching or washing of a biologically derived feed that is sufficiently economic to be commercially applied in a refinery.

Generally one of the existing process units in an oil refinery is the so-called crude desalter. Such crude desalter removes suspended salts and water from a crude oil. Removing of the salts is needed to avoid fouling and/or deposits of the salts downstream; and/or to avoid the formation of salts that can be corrosive to the processing hardware. To remove the salts, a stream of wash water is mixed with a stream of crude oil feed, creating an emulsion. The emulsion is subsequently phase separated in the crude desalter and separated streams of desalted crude oil and salt-containing waste water are discharged from the crude desalter. The crude desalter normally contains a series of electrically charged grids to improve the coalescence of water droplets into larger droplets within the crude desalter. If, however, these electrically charged grids are contacted with too much water, this may cause an electric overload. Therefore, also chemical additives are added to the crude oil feed to accelerate the phase separation.

It would be an advancement to the art to provide a process that may assist further in the phase separation of the crude desalter and/or that would allow one to carry out this phase separation in a more economical manner.

### SUMMARY OF THE INVENTION

The above has been achieved with the process according to the invention, wherein the washing of a biologically derived feed has been integrated within the water-household of a refinery.

Accordingly, the present invention provides a process comprising
a) providing a biologically derived feed
b) washing the biologically derived feed with a first stream of water, resulting in an leachate water stream;
c) providing a petroleum derived feed; and
d) washing at least part of the petroleum derived feed with at least part of the leachate water stream obtained in step b) to produce a waste water stream.

The waste water stream obtained in step d) may conveniently be cleaned in a waste water treatment unit of a refinery and thereafter optionally recycled in part to step a).

The petroleum derived feed in step c) may conveniently be a crude oil which may be washed in step d) in a crude desalter.

The process according to the invention advantageously allows for an economic integration of the leachate water obtained after washing a biologically derived feed within a refinery where the biologically derived feed is co-processed with a petroleum derived feed. It may advantageously reduce waste water flows and/or the amount of raw or fresh water needed. That is, it may advantageously reduce the overall water footprint of the refinery, which may in turn result in lower wastewater treatment operating and maintenance costs.

When the petroleum derived feed in step c) is a crude oil which is washed in step d) in a crude desalter, an additional advantage may be the improved economics of the crude desalter. Due to the high volumes of wash water needed for a crude desalter and the limited availability of wash water within a refinery, a refinery may often use wash water within the crude desalter that is contaminated with amines and/or ammonia. The presence of such amines and/or ammonia may increase the pH of the wash water, complicating the phase separation. This in turn may result in the need to add more chemical additives and/or to take other expensive measures to avoid an electric overload of the electrically charged grids. The leachate water stream obtained in the process according to the invention advantageously comprises leached acids (as explained in detail below) which may assist in lowering the pH of a total wash water stream used in a crude desalter. This may for example allow one to have higher concentrations of amines and/or ammonia in the remainder of the total wash water stream for the crude desalter or it may allow one to lower the amounts of chemical additives that need to be added.

### BRIEF DESCRIPTION OF THE DRAWINGS

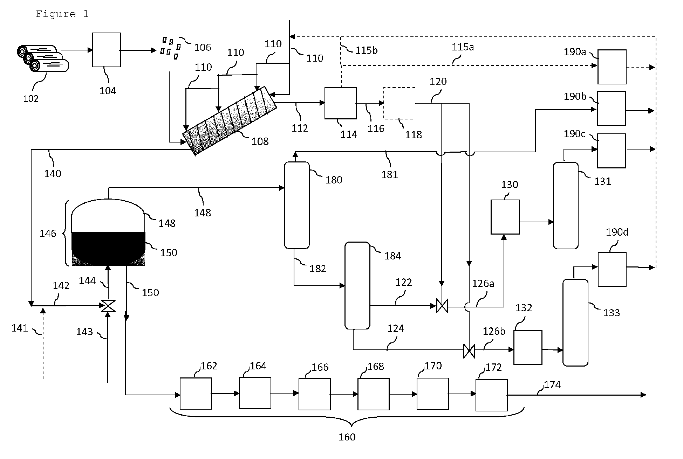

Figure 1 shows a schematic diagram of a first process according to the invention.

### DETAILED DESCRIPTION OF THE INVENTION

In step a) of the process according to the invention a biologically derived feed is provided.

By biologically derived feed is herein understood a feed containing or consisting of biomass material. By biomass material is herein understood a composition of matter of biological origin as opposed to a composition of matter obtained or derived from petroleum, natural gas or coal. Without wishing to be bound by any kind of theory it is believed that such composition of matter of biological origin may contain carbon-14 isotope in an abundance of about 0.0000000001 %, based on total moles of carbon. Preferably the biologically derived feed is a feed containing or consisting of cellulosic and/or lignocellulosic material and/or a feed containing or consisting of compounds derived from a cellulosic and/or lignocellulosic material. By a cellulosic material is herein understood a material containing cellulose and optionally also lignin and/or hemicellulose. By a lignocellulosic material is herein understood a material containing cellulose and lignin and optionally hemicellulose. Preferably the biologically derived feed comprises or consists of a material that is not used for food production.

The biologically derived feed may comprise solids, liquids, gases or any mixtures thereof. For example the biologically derived feed may comprise or consist of one or more solid biomass materials; one or more biologically derived pyrolysis oils; and/or one or more biocrudes, which may have been obtained by solvolysis and/or liquefaction of a solid biomass material; and/or one or more animal fat(s) and/or fish oil(s); and/or one or more vegetable oil(s); and/or used cooking oil.

In a preferred embodiment the biologically derived feed may contain or consist of solid biomass material. Examples of solid biomass materials include aquatic plants and algae, agricultural waste and/or forestry waste and/or paper waste and/or plant material obtained from domestic waste. Preferably the solid biomass material contains or consists of a cellulosic or lignocellulosic material. Examples of cellulosic or lignocellulosic materials include for example agricultural wastes such as corn stover, soybean stover, corn cobs, rice straw, rice hulls, oat hulls, corn fibre, cereal straws such as wheat, barley, rye and oat straw; grasses; forestry products and/or forestry residues such as wood and wood-related materials such as sawdust and bark; waste paper; sugar processing residues such as bagasse and beet pulp; or mixtures thereof.

More preferably the solid biomass material comprises or consists of a cellulosic or lignocellulosic material selected from the group consisting of wood, sawdust, bark, straw, hay, grasses, bagasse, corn stover and/or mixtures thereof.

Most preferably the solid biomass material comprises wood, for example as wood chips. The wood may include soft wood and/or hard wood.

The solid biomass material may optionally have undergone drying, torrefaction, steam explosion, particle size reduction, densification and/or pelletization and may hence be provided in a torrefied, steam exploded, densified and/or pelletized form.

When the biologically derived feed comprises a solid biomass material, such solid biomass material preferably has undergone a particle size reduction before the solid biomass material is washed in step b). In one preferred embodiment, the solid biomass material has only undergone a particle size reduction and is essentially not dried at any deliberately elevated temperature, torrefied, steam exploted, densified and/or pelletized before washing in step b).

The particle size of the solid biomass material can be reduced in any manner known to the skilled person to be suitable for this purpose. Suitable methods for particle size reduction include chipping, crushing, grinding and/or milling. The particle size reduction may preferably be achieved by means of a ball mill, hammer mill, (knife) shredder, chipper, knife grid, or cutter.

Preferably the solid biomass material particles have a mean thickness in the range from equal to or more than 5 micrometer (micron), more preferably equal to or more than 10 micrometer, even more preferably equal to or more than 20 micrometer, and most preferably equal to or more than 100 micrometer to equal to or less than 30000 micrometer (i.e. 3 centimeter), more preferably equal to or less than 10000 micrometer (i.e. 1 centimeter), more preferably equal to or less than 5000 micrometer (i.e. 0.5 centimeter) and most preferably equal to or less than 1000 micrometer (i.e.0.1 centimeter).

In an optional embodiment the particle size reduction of the solid biomass material may be carried out whilst having the solid biomass material suspended in a liquid to improve processibility and/or avoid dusting. The liquid can advantageously be water. This allows one to combine a particle size reduction step as described above with the wash step of step b).

The biologically derived feed may already contain water. For example, the biologically derived feed may comprise in the range from equal to or more than 10wt% to equal to or less than 80 wt% water. If the biologically derived feed has been stored before being submitted to the washing in step b), the water content of the biologically derived feed may have dropped. In some cases therefore, the water content of the biologically derived feed, may lie in the range from equal to or more than 10wt% to equal to or less than 50wt%. When the water content of a solid biomass material lies in the range from equal to or more than 10 to equal to or less than 50wt%, it may be desirable to treat the solid biomass material with steam to remove air from the pores and/or wet the pores allowing the washing water to access the pores more easily. Hence, when providing a solid biomass material having a water content in the range from equal to or more than 10wt% to equal to or less than 80 wt%; and drying such solid biomass material (for example during storage) to obtain a dried solid biomass material having a reduced water content (for example in the range from equal to or more than 10wt% to equal to or less than 50 wt%); it may be advantageous to subsequently treat the dried solid biomass material with steam to obtain a steamed solid biomass material wherein the water content is higher again than the water content of the dried solid biomass material.

In another preferred embodiment the biologically derived feed may comprise or consist of a so-called biocrude. By a biocrude is herein understood the product of a so-called solvolysis, liquefaction and/or hydroliquefaction process. Such a biocrude may be prepared by converting a solid biomass material as described herein above, for example by contacting the solid biomass material with a liquid solvent at a temperature of equal to or more than 200°C; or by contacting the solid biomass material with a liquid solvent at a temperature of equal to or more than 100°C in the presence of a catalyst. Such a conversion may be carried out in the presence or absence of a source of hydrogen such as a hydrogen gas. Further the liquid solvent may contain water and/or an organic solvent. The organic solvent may contain hydrocarbon compounds and/or oxygenates. For example the organic solvent may conveniently at least partly consist of biocrude product produced. Examples of biocrudes and the processes for preparing them are provided in WO2011141546, WO2013072391, herein incorporated by reference.

In step b) the biologically derived feed is washed with a first stream of water, resulting in a leachate water stream.

The first stream of water is a stream containing water. In addition to the water the first stream of water may also comprise one or more other components and/or contaminants. For example the first stream of water may in addition to the water comprise one or more organic compounds and/or one or more, possibly dissolved, salts and/or ions. Examples of such one or more organic compounds include hydrocarbon compounds and/or oxygenates. Examples of such possible dissolved salts and/or ions include nitrogen (for example in the form of ammonia and/or amines), potassium, sodium, phosphorous, sulphur, magnesium, calcium, silicon and/or chlorides.

The first stream of water is preferably relatively clean. Preferably the concentration of chlorides in the first stream of water is equal to or less than 150 ppm weight, more preferably equal to or less than 100 ppm weight, yet more preferably equal to or less than 50 ppm weight, even more preferably equal to or less than 20 ppm weight, and most preferably equal to or less than 10 ppm weight, based on the total weight of the water. Suitably, the concentration of chlorides in the first stream of water is equal to or more than 0 ppm weight, more suitably equal to or more than 1 ppm weight, based on the total weight of the water.

Preferably the concentration of calcium, potassium and sodium in the first stream of water, each separately, is equal to or less than 150 ppm weight, more preferably equal to or less than 100 ppm weight, yet more preferably equal to or less than 50 ppm weight, even more preferably equal to or less than 20 ppm weight, and most preferably equal to or less than 10 ppm weight, based on the total weight of the water. Suitably, the concentration of calcium, potassium and sodium in the first stream of water, each separately, is equal to or more than 0 ppm weight, more suitably equal to or more than 1 ppm weight, based on the total weight of the water.

Preferably, the concentration of sulphides in the first stream of water is equal to or less than 100 ppm weight, more preferably equal to or less than 50 ppm weight, yet more preferably equal to or less than 20 ppm weight, even more preferably equal to or less than 10 ppm weight, and most preferably equal to or less than 5 ppm weight, based on the total weight of the water. Suitably, the concentration of sulphides in the first stream of water is equal to or more than 0 ppm weight, more suitably equal to or more than 1 ppm weight, based on the total weight of the water.

Preferably, the concentration of cyanides in the first stream of water is equal to or less than 100 ppm weight, more preferably equal to or less than 30 ppm weight, yet more preferably equal to or less than 10 ppm weight, even more preferably equal to or less than 5 ppm weight, and most preferably equal to or less than 1 ppm weight, based on the total weight of the water. Suitably, the concentration of cyanides in the first stream of water is equal to or more than 0 ppm weight, more suitably equal to or more than 1 ppm weight, based on the total weight of the water.

Preferably, the concentration of ammonia in the first stream of water is equal to or less than 500 ppm weight, more preferably equal to or less than 200 ppm weight, yet more preferably equal to or less than 100 ppm weight, even more preferably equal to or less than 70 ppm weight, and most preferably equal to or less than 50 ppm weight, based on the total weight of the water. Suitably, the concentration of ammonia in the first stream of water is equal to or more than 0 ppm weight, more suitably equal to or more than 1 ppm weight, based on the total weight of the water.

In addition the first stream of water may comprise traces of hydrocarbons.

The first stream of water may for example contain or consist of fresh water; boiler feed water, condensed waste steam; water obtained from one or more distillation towers; wasted cooling water; recycled cleaned water; and/or recycled stripped sour water. Examples of fresh water include surface water (for example obtained from rivers and/or lakes in the neighbourhood of a refinery); purchased water (for example water purchased from a municipality, service- or tap-water); groundwater; rain or storm water. More preferably the first stream of water comprises or consists of fresh water and/or recycled stripped sour water.

Most preferably the first stream of water comprises or consists of stripped sour water. Such stripped sour water may conveniently be obtained from one or more so-called sour water strippers. By sour water is herein meant waste water that contains hydrogen sulphide, ammonia and optionally cyanides. Such waste water containing hydrogen sulphide and ammonia may be produced in one or more refinery units. For example sour water may be produced in a atmospheric tower overhead drum, a vacuum tower hotwell, the catalytic cracker fractionator's overhead drum, a delayed coker fractionator's overhead drum, a visbreaker fractionator's overhead drum, wash water separators of any hydrotreaters and/or any hydrocrackers and/or a tail gas treater of a sulphur plant. In addition to the hydrogen sulphide and the ammonia, the sour water may further contain phenolics and/or chloride. By a sour water stripper is herein understood a stripping unit that uses steam to remove hydrogen sulphide and ammonia from a sour water stream to produce a stripped sour water stream. Such stripped sour water stream contains less hydrogen sulphide and ammonia than the sour water stream that is submitted to the stripping unit. The stripped sour water stream, however, may suitably still contain sulphides and/or ammonia and/or phenol and/or chloride and/or other contaminants at ppm weight levels as mentioned above.

The water used for washing of the biologically derived feed may have a wide range of temperatures. Preferably the biologically derived feed may have a temperature in the range from equal to or more than 5°C to equal to or less than 80°C. Preferably the first stream of water may have a temperature in the range from equal to or more than 10°C to equal to or less than 150°C, more preferably in the range from equal to or more than 20°C to equal to or less than 140°C. Advantageously water heated to a temperature in the range from 30°C to 120°C may be used to simultaneously wash the biologically derived feed as well as preheat such feed for any subsequent steps. In such case it can be advantageous to use waste cooling water that may still have a certain temperature in the first stream of water in washing step b).

The weight ratio of first stream of water to biologically derived feed may preferably lie in the range of equal to or more 0.5:1 (kg water: kg feed), more preferably equal to or more than 5:1 to equal to or less than 50:1, more preferably equal to or less than 10:1.

The biologically derived feed may be washed in any manner known to the person skilled in the art to be suitable therefore.

In one embodiment, the biologically derived feed may be washed via so-called immersion leaching. Immersion leaching is herein understood to refer to a method comprising the submerging the biologically derived feed within water and submitting it to a batch or continuous flow of water. The immersion leaching may be carried out with or without agitation. The leaching time during such immersion leaching may preferably vary in the range from equal to or more than 5 minutes, preferably equal to or more than 10 minutes, to equal to or less than 2 hours, preferably equal to or less than 1 hours.

The loading of the biologically derived feed within the water may preferably range from equal to or more than 3 liter water, more preferably equal to or more than 10 liter water, most preferably from equal to or more than 50 liter water to equal to or less than 200 liter water, more preferably equal to or less than 100 liter water per kilogram of biologically derived feed.

In another embodiment, the biologically derived feed may be washed via so-called spray or pour leaching. By spray respectively pour leaching is herein understood the spraying respectively pouring of water onto a layer of biologically derived feed. Preferably the layer of biologically derived feed is supported on a porous surface, which porous surface allows the leachate water to drip through.

The washing in step b) may be carried out batchwise, continuously or semi-continuously.

In a preferred embodiment washing step b) is carried out in a staged manner, where the first stream of water is supplied to the biologically derived feed in two or more subsequent stages.

The biologically derived feed may be washed with the first stream of water in a co-current, cross current or counter current manner. Preferably the biologically derived feed is washed with the first stream of water in a counter current manner.

Any equipment known to the skilled person in the art to be suitable for the washing of a biologically derived feed may be used in washing step b). Preferably, however, the biologically derived feed is washed in a so-called screw press and/or rotary drum washer. During washing step b) the first stream of water is preferably supplied in a counter current fashion to the biologically derived feed. Hence, most preferably the biologically derived feed is washed in a so-called screw press and/or rotary drum washer where the first stream of water is supplied in a counter current fashion to the biologically derived feed.

By a leachate water stream is herein understood a stream of water comprising leached out salts. The salts may conveniently be present in a dissociated (dissolved) form. The leachate water stream may for example contain ammonia and/or amines, potassium, sodium, phosphorous, sulphur, magnesium, calcium, silicon, and/or chlorides. In addition, the leachate water may be contaminated with some hydrocarbon compounds, phenolics (such as phenol) and/or some oxygenates. The concentrations of the salts, hydrocarbon compounds and/or oxygenates may depend on the biomass used and the water to biomass ratio.

Preferably, the leachate water stream contains concentrations of ammonia, cyanides, sulphides, calcium, potassium and sodium, and/or chlorides as indicated above for the first stream of water.

It is, however, possible that higher amounts of ammonia, cyanides, sulphides, calcium, potassium and sodium, chlorides and/or other contaminants are leached from the biologically derived feed such that the leachate water stream contains higher concentrations of such ammonia, cyanides, sulphides, calcium, potassium and sodium, chlorides and/or other contaminants. As a result of such higher concentrations, salts may precipitate. In a preferred embodiment, step b) therefore further comprises filtering the leachate water stream. The leachate water stream obtained after filtering may herein also be referred to as a filtered leachate water stream.

During such a filtering, any precipitated salts may conveniently be removed from the leachate water stream. Filtering may be carried out in any manner known to the person skilled in the art to be suitable therefore. The leachate water stream may be cooled before filtering, if so desired, to allow more salts to precipitate and be removed.

Preferably, the pH of the leachate water stream is lower than the pH of the first stream of water. During washing step b) organic and/or non-organic acids may be leached from the biologically derived feed, causing the pH of the resulting leachate water stream to drop. Preferably the pH of the leachate water stream lies in the range from equal to or more than 1.0 to equal to or less than 7.0, more preferably in the range from equal to or more than 3.0 to equal to or less than 7.0 and most preferably from equal to or more than 5.5 to equal to or less than 7.0.

From step b) further a washed biologically derived feed may be obtained. Such a washed biologically derived feed may for example comprise washed solid biomass material or a washed biocrude.

When the washed biologically derived feed is a washed solid biomass material, the washed solid biomass material may subsequently undergo drying, torrefaction, steam explosion, (further) particle size reduction, densification and/or pelletization and may hence be converted into a dried, torrefied, steam exploded, densified and/or pelletized form.

The particle size of the washed solid biomass material can be (further) reduced in any manner known to the skilled person to be suitable for this purpose. Suitable methods for particle size reduction include crushing, grinding and/or milling. The particle size reduction may preferably be achieved by means of a ball mill, hammer mill, (knife) shredder, chipper, knife grid, or cutter.

More preferably the washed solid biomass material is first dried and/or torrefied, before reducing its particle size. Most preferably the washed solid biomass material is dried and/or torrefied and subsequently micronized to obtain a micronized solid biomass material. Such a dried and/or torrefied and/or micronized solid biomass material may advantageously have an improved processibility downstream.

Preferably the micronized solid biomass material has a particle size distribution where the mean particle size lies in the range from equal to or more than 5 micrometer (micron), more preferably equal to or more than 10 micrometer, even more preferably equal to or more than 20 micrometer, and most preferably equal to or more than 100 micrometer to equal to or less than 5000 micrometer and most preferably equal to or less than 500 micrometer. Most preferably the solid biomass material has a particle size distribution where the mean particle size is equal to or more than 100 micrometer and/or equal to or less than 3000 micrometer to avoid blocking of pipelines and/or pumps.

For practical purposes the particle size distribution and mean particle size of the solid biomass material can be determined with a Laser Scattering Particle Size Distribution Analyzer, preferably a Horiba LA950, according to the ISO 13320 method titled "Particle size analysis - Laser diffraction methods".

The washed biologically derived feed may conveniently be forwarded to one or more conversion units in a refinery.

For example the washed biologically derived feed may conveniently be forwarded to a liquefaction unit, thermal cracking unit, a hydrocracking unit, resid cracking unit or a fluid catalytic cracking unit in a refinery. If so desired, the washed biologically derived feed may suitably be mixed with one or more fractions of a washed petroleum derived feed as described below, and the two feeds may be forwarded to one or more conversion units in the refinery for simultaneous co-processing.

In step c) a petroleum derived feed is provided. Preferably the petroleum derived feed comprises or consists of a fossil-derived material. Preferably the petroleum derived feed, respectively the fossil-derived material comprises one or more hydrocarbon compounds. By a hydrocarbon compound is herein preferably understood a compound consisting of hydrogen and carbon.

The petroleum derived feed, respectively the fossil-derived material, preferably contains or consists of a crude oil and/or a fraction thereof.

The crude oil may suitably be a conventional crude oil or an unconventional crude oil (that is, oil produced or extracted using techniques other than the traditional oil well method). Examples of conventional crude oils include West Texas Intermediate crude oil, Brent crude oil, Dubai-Oman crude oil, Arabian Light crude oil, Midway Sunset crude oil or Tapis crude oil. Examples of disadvantaged crudes include, but are not limited to, crudes from of the following regions of the world: U.S. Gulf Coast and southern California, Canada Tar sands, Brazilian Santos and Campos basins, Egyptian Gulf of Suez, Chad, United Kingdom North Sea, Angola Offshore, Chinese Bohai Bay, Venezuelan Zulia, Malaysia, and Indonesia Sumatra.

The crude oil may already contain small amounts of water. For example, the petroleum derived feed may comprise equal to or more than 0.05 wt% water, suitably equal to or more than 0.1 wt% water or even equal to or more than 0.3 wt% water and suitably equal to or less than 1.0 wt% water, based on the total weight of such petroleum derived feed.

In addition the crude oil or a fraction thereof, may comprise nitrogen (for example 0.01 to 2 wt%), sulphur (for example 0.05 to 6 wt%) metals (for example 5 to 600 ppm by weight); and chlorine (for example 10 to 100 ppm by weight). The salts can be dissolved in the water in the crude oil, not in the crude oil itself.

In step d) at least part of the petroleum derived feed is washed with at least part of the leachate water stream obtained in step b) to produce a waste water stream.

By washing at least part of the petroleum derived feed is herein understood that part or whole of the petroleum derived feed can be washed. Preferably the whole of the petroleum derived feed is washed, especially if the petroleum derived feed is a crude oil as mentioned hereinabove.

By washing with at least part of the leachate water stream obtained in step b) is herein understood that part or whole of the leachate water stream may be used to wash the petroleum derived feed. In one preferred embodiment the whole of the leachate water stream is used to wash the petroleum derived feed. In another preferred embodiment only part of the leachate water stream is used to wash the petroleum derived feed and another part of the leachate water stream may for example be recycled to be re-used in washing the biologically derived feed.

Apart from the leachate water stream also other streams of water may be used to wash the petroleum derived feed in step d). The total of all streams of water used to wash the petroleum derived feed in step d) is herein also referred to as the total wash water stream. In one embodiment the total wash water stream consists of the leachate water stream. In another, preferred, embodiment the total wash water stream comprises the leachate water stream blended with one or more other water streams. For example the total wash water stream may comprise in the range from equal to or more than 1 wt% to equal to or less than 99 wt%, more preferably in the range from 10 wt% to equal to or less than 50wt% of water originating from the leachate water stream. If so desired this total wash water stream may be filtered in a similar manner as described above for the leachate water stream.

In a preferred embodiment step d) comprises washing of a petroleum derived feed, such as for example a crude oil as described above, with the leachate water stream in a desalter unit, such as for example a crude oil desalter. In a crude oil desalter, water and salts and/or ions can be removed from a crude oil. More preferably the petroleum derived feed in step c) is a crude oil and part or the whole of such crude oil is washed with part or whole of the leachate water stream in step d) in a crude oil desalter. The use of at least part of the leachate wash water to wash at least part of such a crude oil in a crude oil desalter is especially advantageous for several reasons. As explained above, the leachate wash water may have a relatively low pH, for example in the range from equal to or more than 3.0 to equal to or less than 7.0. The leachate wash water may therefore advantageously be used to lower the pH of the water with which the crude oil is washed in a crude oil desalter. As a result of the lower overall pH, emulsion formation within a crude oil desalter may decrease; the flux of phenolics into the oil fraction of a crude oil desalter may increase; the flux of sulphides into the oil fraction of a crude oil desalter may increase; and/or the flux of ammonia into the aqueous fraction of a crude oil desalter may increase. It is further especially advantageous that by using the process according to the invention, not only phenolics originating from the petroleum derived feed, such as a crude oil, may conveniently be pushed into an oil fraction, but that also phenolics originating from the biologically derived feed may conveniently be pushed towards such an oil fraction. The later may allow one to avoid any cumbersome or elaborative purification processes for removal of those phenolics from the leachate water stream. This is especially advantageous as waste water treatment units of a refinery may have specifications for phenolics that cannot be exceeded.

A crude oil desalter is preferably operated with amounts of wash water that are in the range from equal to or more than 3 wt% to equal to or less than 8 wt%, more preferably in the range from equal to or more than 4 wt% to equal to or less than 6 wt% of water, based on the total weight of the crude oil. That is the water to crude oil weight ratios most preferably lie in a range from equal to or more than 4:100 to equal to or less than 6:100.

The amount of biologically derived feed processed in a refinery may be lower than the amount of petroleum derived feed (such as for example crude oil) processed in such a refinery. For example, the weight ratio of biologically derived feed (BDF) processed in a refinery to petroleum derived feed (PDF) processed in such a refinery may conveniently lie in the range from equal to or more than 0.1:100 (BDF:PDF) to equal to or less than 20:100 (BDF:PDF), suitably in the range from equal to or more than 1:100 (BDF:PDF) to equal to or less than 10:100 (BDF:PDF).

Preferably therefore step b) comprises washing the biologically derived feed with a first stream of water, resulting in a leachate water stream; blending the leachate water stream with one or more further streams of water to provide a total wash water stream containing the leachate water; and wherein step d) comprises washing at least part of the petroleum derived feed with the total wash water stream to produce a waste water stream.

Preferably the petroleum derived feed is washed with water having a pH in the range from equal to or more than 5.5 to equal to or less than 7.0. As explained above, one of the advantages of the process according to the invention is that during the washing of the biologically derived feed, acids can be leached into the leachate water stream. Due to the leaching of acids from the biologically derived feed into the leachate water stream, the pH of the leachate water stream may be relatively low. The leachate water stream may thus be advantageously used to lower the pH of a total wash water stream. That is, preferably the process according to the invention comprises washing the biologically derived feed with a first stream of water, resulting in an acidic leachate water stream having a pH of less than 7.0; blending the acidic leachate water stream with a second stream of water and optionally one or more further streams of water, which second stream of water has a pH that is higher than the pH of the acidic leachate water stream, to provide a total wash water stream, which total wash water stream contains the leachate water and preferably has a pH in the range from equal to or more than 5.5 to equal to or less than 7.0; and washing at least part of the petroleum derived feed with the total wash water stream to produce a waste water stream.

Although the use of the leachate water stream may assist in reducing the need for the addition of chemical additives, it may still be advantageous to add one or more chemical additives to the total wash water stream to for example increase or lower the pH of any total wash water stream used in step d); to decrease emulsion formation within a crude oil desalter; to increase the flux of phenolics into the oil fraction of a crude oil desalter and/or to neutralize any phenolics; to increase the flux of sulphides into the oil fraction of a crude oil desalter; and/or to increase the flux of ammonia into the aqueous fraction of a crude oil desalter. Any additives known to be suitable for this purpose by the skilled person in the art may be used.

Preferably step d) includes washing the petroleum derived feed in one or more desalter vessels. Such one or more desalter vessels may be part of a desalter unit, such as a crude oil desalter. In a preferred embodiment a series of two or more subsequent desalter vessels may be used. In the one or more desalter vessels, an aqueous phase (also referred to as aqueous fraction) can suitably be separated from an oil phase (also referred to as oil fraction). Subsequently the aqueous phase comprising water and dissolved salts (also referred to as brine) can be removed from the desalter vessel. This aqueous phase comprising water and salts (brine), can be considered a waste water stream.

The waste water stream obtained in step d) is preferably purified in a waste water treatment unit to produce purified water. Such a waste water treatment unit may for example comprise a primary oil/water separation, a secondary oil/waster separation, an equalization, a biological treatment (such as for example with aerobic or anaerobic bacteria), a clarification and/or a sand filtration. If so desired, the purified water may subsequently be advantageously recycled at least in part to step a).

Figure 1 illustrates an example of a process according to the invention. In figure 1, a solid biomass material such as wood (102) is first reduced in particle size in a particle size reduction unit (104) to produce wood chips (106). The wood chips (106) are forwarded to a modified screw press (108) where the wood chips (106) are washed in a staged manner with a first stream of water (110). The first stream of water may optionally be at least partly obtained from one or more sour water strippers (190a, 190b, 190c and/or 190d). The washed wood chips (112) are forwarded to a drying unit (114) where they are dried. Water retrieved from the drying unit (114) may optionally be forwarded to a sour water stripper (190a) or optionally directly recycled to be re-used as part of the first stream of water (110) (see dotted lines 115a respectively 115b). The washed and dried wood chips (116) may subsequently be torrefied and/or further reduced in particle size in a torrefaction and/or further particle size reduction unit (118). The obtained wood chips (120) that have been washed and dried and have optionally been torrefied and/or further reduced in particle size can subsequently be suspended in a refinery stream to produce a feed suspension. Such a feed suspension can be forwarded to one or more of the refineries processing units. For example the obtained wood chips (120) may be suspended in a vacuum gas oil stream (122) and the obtained feed suspension (126a) may be forwarded to a fluid catalytic cracking (FCC) unit (130). The products from the FCC unit may be fractionated in a distillation unit (131) and the overhead from this distillation unit (131) may be forwarded to a sour water stripper (190c). Or, for example, the obtained wood chips (120) may for example be suspended in a short residue stream (124) and the obtained feed suspension (126b) may be forwarded to a resid hydrocracker (132). The products from the resid hydrocracker may be fractionated in a distillation unit (133) and the overhead from this distillation unit (133) may be forwarded to a sour water stripper (190d). Depending on the compositions of the streams one or more of the sour water strippers (190a, 190b, 190c and/or 190d) may be combined.

The leachate water stream (140) obtained from screw press (108) and optionally one or more one or more additional water streams (141) are blended to a total wash water stream (142) that is mixed with a crude oil stream (143) and the water-crude oil mixture (144) is provided to a crude desalter unit (146). In the crude desalter unit, an oil phase (148) comprising hydrocarbon compounds (also referred to as desalted crude oil) and an aqueous phase (150) comprising water and dissolved salts (also referred to as brine) are separated. The brine (150) is forwarded to a waste water treatment unit (160). The waste water treatment unit (160) may for example comprise a primary oil/water separation (162), a secondary oil/waster separation (164), an equalization (166), a biological treatment (168), a clarification (170) and/or a sand filtration (172). In the waste water treatment unit (160) a stream of cleaned water (174) is produced. This stream of cleaned water (174) may wholly or in part be discharged and/or be wholly or in part be recycled for use elsewhere in the refinery (not shown).

The desalted crude oil (148) is conveniently forwarded to an atmospheric distillation unit (180). In the atmospheric distillation unit (180) the desalted crude oil (148) is fractionated into multiple fractions. Conveniently water from the atmospheric tower overhead (181) can be forwarded to a sour water stripper (190b). The bottom fraction of this atmospheric distillation unit (180) is the long residue fraction (182). The long residue fraction (182) may conveniently be forwarded to a vacuum distillation unit (184). In the vacuum distillation unit (184) the long residue fraction (182) is fractionated into multiple fractions, including for example a vacuum gas oil stream (122) and a short residue stream (124).

The process according to the invention will further be illustrated by the following non-limiting prophetic example.

### Prophetic example 1:

A wood chips stream of 20 tons/hour is counter currently washed with a stream of 100 tons/hour of relatively clean water. The relatively clean water contains less than 50 ppm weight chloride and consists of various stripped sour water streams. The temperature of such relatively clean water is about 70 °C.

The wood chips are not preheated, have not been dried before and have a water content of about 50 wt% (wt% refers to percentage by weight). The wood chips have a chloride (Cl) content of about 200 milligram per kilogram (on a dry basis). The wood chips are steamed prior to the washing step as this will improve the washing efficiency.

As a result of the counter current washing step 90 wt% of the Cl is removed from the wood chips and has leached into the water (further referred to as leachate water). The leachate water leaving the washing step has a Cl content of 36 milligram per kilogram (mg/kg).

The washed wood chips are subsequently sent to drying and milling steps. The dried wood chips are sent to a torrefaction step prior to the milling step.

The leachate water leaving the wood chips washing step has a relatively low salt content and is used to desalt crude oil. The crude oil contains 0.3 wt% water with a salinity of 3.5 wt% on a Cl basis. The salt water in the crude oil contains approximately 19250 mg/kg of Cl (55 wt% of the salinity). On crude oil basis the Cl content is 58.8 mg/kg.

The 100 ton/hr leachate water, which was first used to wash the wood chips, is sent to a crude oil desalter to desalt a 2000 tons/hr flow of crude oil. After phase separation of the desalted crude oil and an aqueous phase, the desalted crude oil still contains 0.3 wt%. water, but the Cl content is now reduced from 19250 to 1090 mg/kg. On a crude oil basis the Cl content is reduced from 58.8 to 3.3 mg/kg.

The aqueous phase (further referred to as waste water) contains 1090 mg/kg Cl and is subsequently sent to a waste water facility.

## Claims

1. A process comprising
a) providing a biologically derived feed
b) washing the biologically derived feed with a first stream of water, resulting in an leachate water stream;
c) providing a petroleum derived feed; and
d) washing at least part of the petroleum derived feed with at least part of the leachate water stream obtained in step b) to produce a waste water stream.

2. The process according to claim 1, wherein the biologically derived feed comprises or consists of one or more solid biomass materials; one or more biologically derived pyrolysis oils; and/or one or more biocrudes, which may have been obtained by solvolysis and/or liquefaction of a solid biomass material; and/or one or more animal fat(s) and/or fish oil(s); and/or one or more vegetable oil(s); and/or used cooking oil.

3. The process according to anyone of the preceding claims, wherein the biologically derived feed is washed with a first stream of water, which first stream of water contains or consists of fresh water; condensed waste steam; water obtained from one or more distillation towers; wasted cooling water; recycled cleaned water; and/or stripped sour water.

4. The process according to anyone of the preceding claims, wherein the biologically derived feed is washed with a first stream of water, which first stream of water has a temperature in the range from equal to or more than 20°C to equal to or less than 150°C.

5. The process according to anyone of the preceding claims, wherein the biologically derived feed is washed in a so-called screw press and/or rotary drum washer.

6. The process according to anyone of the preceding claims, wherein the first stream of water is supplied in a counter current fashion to the biologically derived feed.

7. The process according to anyone of the preceding claims, wherein step b) further comprises leaching of organic and/or non-organic acids from the biologically derived feed into the first stream of water.

8. The process according to anyone of the preceding claims, wherein the leachate water stream has a pH of less than 7.0, preferably a pH in the range from equal to or more than 3.0 to less than 7.0.

9. The process according to anyone of the preceding claims, wherein the leachate water stream contains hydrocarbon compounds, phenolics and/or oxygenates.

10. The process according to anyone of the preceding claims, wherein step b) further comprises filtering the leachate water stream.

11. The process according to anyone of the preceding claims, wherein the petroleum derived feed contains or consists of a crude oil and/or a fraction thereof.

12. The process according to anyone of the preceding claims, wherein step d) comprises washing at least part of the petroleum derived feed with a total wash water stream, which total wash water stream comprises at least part of the leachate water stream obtained in step b) and one or more other water streams.

13. The process according to anyone of the preceding claims, wherein the petroleum derived feed is a crude oil and step d) comprises washing at least part of the crude oil in a crude oil desalter.

14. The process according to anyone of the preceding claims, wherein step b) comprises washing the biologically derived feed with a first stream of water, resulting in an acidic leachate water stream having a pH of less than 7.0; blending the acidic leachate water stream with a second stream of water and optionally one or more further streams of water, which second stream of water has a pH that is higher than the pH of the acidic leachate water stream, to provide a total wash water stream, which total wash water stream contains the leachate water and preferably has a pH in the range from equal to or more than 5.5 to equal to or less than 7.0; and wherein step d) comprises washing at least part of the petroleum derived feed with the total wash water stream to produce a waste water stream.
